# FASCICULE DE BREVET EUROPEEN

(11) **EP 2 200 557 B1**
(45) Date de publication et mention de la délivrance du brevet: **12.08.2015**
(21) Numéro de dépôt: 08870038.0
(22) Date de dépôt: 20.10.2008
(51) Int. Cl.: A61J 1/03, A61J 7/04

(54) **Dispositif et procédé de mesure de l'observance**
Vorrichtung und Verfahren zur Complianceüberwachung
Device and method for measuring compliance

(30) Priorité: 18.10.2007 FR 0707317
(43) Date de publication de la demande: 30.06.2010
(73) Titulaire: Abr Pharma, 75002 Paris (FR)
(72) Inventeur: BOUSQUET, Bernard, F-75005 Paris (FR)
(74) Mandataire: Benech, Frédéric
(86) Numéro de dépôt international: PCT/FR2008/001473
(87) Numéro de publication internationale: WO 2009/087313

(56) Documents cités:
- WO-A-2006/023294
- US-A- 4 660 991
- US-A1- 2005 226 100
- US-A1- 2007 084 746

## Description

La présente invention concerne un dispositif de mesure de l'observance de la prise de médicaments, du type comprenant une plaquette équipée d'un circuit électronique de détection et d'enregistrement du moment (date et heure) d'extraction de pilules appartenant à un blister.

Elle concerne également un procédé de mesure de l'observance utilisant un tel dispositif, ainsi qu'un nouveau kit de présentation d'une composition médicamenteuse ou nouvelle composition médicamenteuse dont la forme galénique comprend un tel dispositif.

Outre ses applications en recherche clinique, elle trouve une application particulièrement importante, bien que non exclusive, dans le domaine de la mesure et de l'amélioration de l'usage des médicaments de prescription, permettant de mesurer l'observance, c'est à dire le degré de respect par des patients ambulatoires d'une prescription médicamenteuse faite par un médecin, de ville ou hospitalier, puits délivrée par un pharmacien, d'officine le plus souvent, ou hospitalier en particulier dans le cas de médicaments qui réglementairement ne peuvent pas être distribués en pharmacie de ville.

Par blisters (dénomination anglo-saxonne désormais usuelle en français) on entend des plaquettes thermoformées munies d'alvéoles contenant des pilules c'est-à-dire au sens large des unités thérapeutiques solides, comprimés, gélules... , lesdites alvéoles ayant leur orifice fermé par une feuille ou un film (en général en aluminium). Ce film de protection se rompt plus ou moins facilement quand l'utilisateur extrait la pilule, le plus souvent en la poussant, pour forcer son passage au travers du film de protection.

On connaît déjà des procédés et dispositifs permettant d'enregistrer des données historiques sur les prises médicamenteuses par un patient. Recourrant à des technologies différentes, ils revendiquent une utilité, en recherche clinique, dans le cadre des études expérimentales permettant d'évaluer l'efficacité et la tolérance d'un médicament et nécessaires à l'obtention d'une Autorisation de Mise sur le Marché (AMM).

De tels procédés, non adaptés à un usage de routine en pratique quotidienne, sont destinés au cadre expérimental, c'est-à-dire à la recherche clinique, où le médicament est remis ou donné au patient par le médecin investigateur sans passer par une prescription préalable décidée et réalisée par un médecin puis suivie par une délivrance en pharmacie.

On connaît ainsi une solution du type mentionné ci-dessus, constituée par un blister encarté entre deux couches de carton, ou autre protection encombrante et rigide, dans laquelle est intégré au moment de la fabrication du lot thérapeutique un circuit électronique de détection.

Un tel dispositif porte toute une série de références propres à l'expérimentation dont il fait partie. Chaque pilule doit de plus correspondre à une entrée dans le microprocesseur, ce qui rend la partie électronique lourde et trop coûteuse pour un usage unique.

Cette solution présente de ce fait une utilisation limitée.

Elle est de plus complexe et coûteuse à fabriquer, ne s'adapte pas aisément à toutes les tailles de pilules et aux multiples contraintes réglementaires, d'ergonomie. En particulier, si elle répond aux contraintes des conditionnements pour lesquels une certaine résistance à l'extraction est souhaitée, par exemple pour les médicaments à usage pédiatrique, elles ne s'adaptent pas aux cas où une ouverture facile est souhaitée. C'est par exemple le cas pour les patients ayant une vision et/ou une motricité diminuées, des troubles cognitifs non forcément identifiés, etc.

Une autre solution connue utilise un circuit électrique réalisé par l'impression d'encres aqueuses sur du papier. Ce circuit électrique est alors entièrement dissocié de la partie électronique. Le circuit de la partie électronique ne peut en effet pas être en papier en raison de la nécessité de soudure.

Une telle solution impose dès lors une étape de fabrication supplémentaire. Elle est de plus fragile, pose des problèmes de fiabilité des encres en terme de maintien dans le temps d'une bonne conductibilité et de précision concernant leur résistivité. Elle impose de ce fait un procédé de contrôle-qualité nécessairement complexe et nécessite une augmentation de la taille ainsi qu'une rigidification d'un support nécessairement opaque pour améliorer sa fiabilité, ce qui est incompatible avec un usage du médicament en conditions usuelles.

Cette solution a enfin nécessairement pour finalité un usage expérimental exclusif, c'est à dire réservé à la recherche clinique en raison de la technologie utilisée.

On connaît enfin des solution répondant mieux (en apparence) au problème posé que les solutions précédentes, car présentant des tentatives d'utilisation dans un contexte de médicaments de prescription.

Il s'agit de flacons ou bouteilles avec bouchon électronique, agencés pour enregistrer chaque ouverture.

De tels dispositifs présentent cependant, ici encore, des inconvénients, car ils imposent le déconditionnement du médicament, c'est-à-dire la sortie de toutes les pilules de leurs alvéoles protectrices avant reconditionnement dans un flacon.

Il nécessite donc soit l'intervention d'un tiers pour effectuer ces opérations, soit l'intervention du patient.

Dans les deux cas, cette solution n'est pas satisfaisante.

L'intervention d'un tiers impose des autorisations administratives préalables souvent impossibles à obtenir hors d'un cadre purement d'expérimentation ou de pilote.

Quant à l'intervention du patient, il s'agit d'une contrainte encore plus inacceptable pour les agences sanitaires, seul l'usage dans un contexte de recherche clinique étant autorisé sur le plan réglementaire.

Il existe de plus un facteur de confusion inhérent au dispositif formé par un flacon et son bouchon enregistreur, qui rend l'interprétation secondaire des données difficiles dans la mesure où l'on ne sait jamais si l'enregistrement d'une ouverture du flacon correspond à une prise ou à un remplissage.

Le système enregistre en effet l'ouverture du flacon ce qui n'équivaut pas obligatoirement à l'authentification d'une sortie de pilule, puisqu'on peut très bien ne pas extraire de pilule ou en extraire plusieurs à cette occasion.

Les patients apprécient par ailleurs peu de transporter et manipuler un flacon jugé encombrant, pour une prise à l'extérieur, alors qu'ils ont pris l'habitude d'utiliser des blisters dont l'usage peut être très discret.

Enfin, l'opération de déconditionnement-reconditionnement conduit à modifier l'aspect d'un médicament commercialisé sous blister ce qui impose la réalisation préalable, quand elle est possible, d'une étude de stabilité du médicament toujours coûteuse.

On connaît également (US 4,660,991) un dispositif de mesures comprenant un blister et un émetteur de signaux en forme de boîtier rigide muni d'une feuille amovible comprenant des obturateurs électriques permettant d'enregistrer la sortie d'une pilule par craquage.

Un tel dispositif présente des difficultés de connectique (faux contacts), nécessite un boîtier assez encombrant, et est à l'origine de nombreuses erreurs, le blister étant aisément désolidarisable du boîtier.

On connaît aussi (US 4,526,474) un dispositif comprenant un blister muni d'un circuit électronique intégré connectable à un détecteur sonore.

Un tel dispositif est coûteux à fabriquer et est nécessairement dédié à un médicament particulier. Il n'est de ce fait utilisable que pour des essais cliniques.

Le document US 2007/0084746 décrit quant à lui un blister collé sur un circuit électronique comprenant un contact par pilule, la partie conductrice destinée à être rompue étant supportée par la zone frangible.

Elle est de ce fait plus compliquée, ne permet pas d'éviter les faux contacts et est ici encore dédié à un médicament.

La présente invention vise à palier les inconvénients de l'art antérieur et à proposer un dispositif selon la revendication 1, et un procédé selon la revendication 16 répondant mieux que ceux antérieurement connus aux exigences de la pratique, que cela soit dans le domaine de la recherche clinique comme en dehors de ce domaine, en ce qu'elle est peu coûteuse, peu contraignante pour les patients, car d'utilisation facile et intuitive, et ce de façon fiable car n'engendrant pratiquement aucun risque de faux positifs ou de faux négatifs, et ce quelque soit les dimensions et/ou les formes des blisters et/ou des pilules. Elle est indépendante de l'habilité du manipulateur, qui doit pouvoir être un patient à la vision non totalement corrigée et/ou présentant un trouble cognitif non diagnostiqué, ou encore des troubles articulaires, moteur, ou neurologiques...

L'invention part notamment du principe d'utiliser autant de micro-interrupteurs que d'unités thérapeutiques, mais avec une défaillance zéro et ce en utilisant les blisters du commerce. Il est donc proposé des interrupteurs irréversibles et fiables, c'est-à-dire tels que l'ouverture d'un interrupteur corresponde effectivement à la sortie complète et évidente d'une unité thérapeutique hors de son alvéole protectrice, pour tous types de médicaments, sans pour autant nécessiter un dispositif spécifique attaché à chaque blister.

Il suffit que le dispositif comporte les mêmes configurations d'alvéoles que le blister. Il peut ainsi être vendu à part indépendamment des blisters.

L'invention permet ainsi d'éviter de générer des données erronées avec les blisters du commerce.

Pour ce faire il faut d'une part que chaque interrupteur s'ouvre de façon irréversible, car si un interrupteur se referme, il empêche la comptabilisation de l'ouverture ultérieure d'un autre interrupteur et d'autre part que tout faux contact puisse être éliminé, surtout du à la pellicule d'aluminium.

Par ailleurs, il est essentiel que l'ouverture d'un interrupteur soit totalement concomitante à l'extraction d'une pilule, tout en ne nécessitant aucun effort perturbant supplémentaire de la part du patient.

En effet, dans le cas contraire, l'utilisateur multipliera les tentatives d'extraction. La résultante sera alors la multiplication de faux-positifs, le système enregistrant des ouvertures successives et rapprochées d'interrupteurs alors que le patient n'a en fait extrait qu'une seule pilule (ou aucune).

Ce risque est renforcé notamment dans le cas de blisters réalisés à partir de matériaux opaque, car aucun contrôle visuel par le patient n'est passible pour vérifier la présence ou l'absence d'une pilule dans son alvéole.

De même, les interrupteurs ne doivent pas s'ouvrir spontanément en cas de manipulation non précautionneuse du blister. En particulier l'ouverture d'un interrupteur liée à l'extraction d'une pilule ne doit pas créer un risque d'ouverture des interrupteurs adjacents du fait du pliage et des pressions inévitablement exercés par l'utilisateur.

Avec l'invention, le patient, sans compétence ou entraînement particuliers, ayant d'éventuels déficits sensoriel, articulaire, moteur et cognitif, va ainsi pouvoir enregistrer ses prises de médicaments délivrés par le pharmacien pour des blisters du commerce, avec des contraintes au-dessous du seuil minimum admis par les autorités sanitaires.

Grâce à la combinaison d'éléments non connus de l'art antérieur, le résultat est saisissant.

Dans ce but, l'invention propose notamment un dispositif de mesure de l'observance comprenant une plaquette équipée d'un circuit électronique de détection et d'enregistrement du moment d'extraction des pilules appartenant à un blister et des moyens de fixation du blister à la plaquette par collage.

La plaquette est caractérisée en ce qu'elle est formée d'un support souple sur lequel est imprimée par dépôt ou collage une partie métallique conductrice dudit circuit pour former des interrupteurs propres à être ouverts lorsque les pilules sont extraites manuellement par un utilisateur.

L'impression doit donc être comprise au sens de circuit « imprimé ».

Le circuit comporte des portions conductrices identiques, réparties régulièrement, et doublées au niveau de chaque interrupteur par une autre chemin conducteur offrant une résistance calibrée.

Le support est souple et flexible, mais suffisamment résistant dans le sens de son plan pour ne pas autoriser de cassure par un utilisateur peu précautionneux tout en permettant de le déformer de façon courbe ou ondulée.

La plaquette est donc agencée pour que, même lorsque l'utilisateur essaye de la plier manuellement par exemple en deux, pour créer une ligne de pliage, il ne peut pas y arriver, sans un effort important qui ne peut être obtenu que si l'utilisateur veut réellement et volontairement casser la plaquette.

La plaquette est de plus avantageusement transparente, suffisamment pour permettre la lecture des mentions figurant sur les films protecteurs des blisters.

Mais surtout elle comprend des portions frangibles intégrant le bord, c'est à dire à cheval sur le bord ou situées directement en vis à vis d'une partie des portions conductrices en forme de languette formant interrupteur. Lesdites portions frangibles sont ainsi réparties régulièrement sur les zones de sortie d'une pilule correspondante de sorte que la portion frangible de la plaquette sensiblement en périphérie d'une portion conductrice est rompue lorsqu'une pilule du blister fixée en vis-à-vis est extraite. Le circuit comporte des moyens de mesure repérant les moments d'incrémentation de l'impédance globale de la partie conducteur et des moyens de calcul agencés pour en déduire le moment d'extraction d'une pilule.

Enfin elle comporte des moyens agencés pour éliminer ou minimiser considérablement les risques de prise en compte de faux contacts, ayant de conclure à l'éjection d'une pilule.

Avantageusement, ces moyens sont des moyens de calculs agencés pour retester régulièrement l'impédance globale de façon à s'affranchir des taux positifs et/ou négatifs.

En d'autres termes, l'invention propose essentiellement un dispositif de mesure de l'observance comprenant une plaquette équipée d'un circuit électronique de détection et d'enregistrement du moment d'extraction des pilules appartenant à un blister et des moyens de fixation du blister à la plaquette, la plaquette étant formée d'un support sur lequel est imprimée par dépôt ou collage d'un fil ou film métallique la partie conductrice dudit circuit pour former des interrupteurs propres à être ouverts lorsque les pilules sont extraites manuellement par un utilisateur, et la dite partie conductrice comportant des portions conductrices identiques réparties régulièrement en parallèle le long d'un chemin conducteur, ledit chemin conducteur étant à chaque fois agencé pour présenter une plus grande résistance que la portion en parallèle, caractérisé en ce que le support est souple, flexible en ce qu'il comprend des portions frangibles au bord desquelles sont imprimées lesdites portions conductrices réparties régulièrement pour chaque fois correspondre à une pilule correspondante, de sorte que les portions frangibles de la plaquette chaque fois associées à une portion conductrice sont rompues lorsqu'une pilule est extraite, en ce que les moyens de fixation sont par collage, en ce qu'il comporte des moyens pour éliminer la prise en compte de faux contacts et en ce que le circuit comporte des moyens de mesure de l'impédance globale de la partie conducteur et des moyens de calcul pour en déduire le moment de l'extraction d'une pilule.

Par fil ou film métallique, on entend notamment un chemin conducteur longiligne d'épaisseur faible (quelques microns ou dizaines de microns) et de largeur par exemple comprise entre 0,1 et 0,5 m, par exemple 0,2mm.

Par au bord desquels, on entend à cheval sur le périphérie c'est à dire en partie à l'intérieur de la zone frangible, par exemple en formant une boucle connectée de chacun de ses côtés, avec le reste de la partie conductrice située à l'extérieur de ladite zone.

A noter que le terme mesure d'impédance est utilisé dans l'invention de façon générale et peut en fait être ramené à une mesure de la résistance du circuit, avec une pile d'alimentation en courant continu.

Le principe consistant à mesurer la résistance de l'ensemble d'un circuit qui, petit à petit, voit son impédance augmenter, par palier correspondant à la valeur calibrée de chaque résistance mise en parallèle, au fur et à mesure que les médicaments sont extraits, et ce, quelque soit la pilule extraite au début ou à la fin de la chaîne, permet ainsi une mesure fiable et simple grâce à un logiciel intégré dans le circuit, logiciel dont la conception est à la portée de l'homme du métier, au vu du problème posé.

Du fait de l'utilisation d'un circuit imprimé métallique, la fiabilité de la mesure est renforcée. En effet il est ainsi possible d'utiliser des résistances électroniques dont la valeur est précise, calibrée, invariable d'une résistance à l'autre et stable dans le temps ce qui est essentiel pour bien identifier le nombre de pilules prises en cas d'expulsion de plusieurs pilules de façon quasi simultanée.

C'est par exemple le cas du patient qui a oublié de prendre son médicament et qui pour ne pas en informer son médecin, va vider ses blisters peu avant la consultation de suivi.

La disposition des portions conductrices au bord des zones frangibles, hors des surfaces d'arrachement du film fermant les alvéoles, généralement en aluminium et potentiellement conducteur, entraînent par ailleurs, en combinaison avec le reste des caractéristiques, une impossibilité ou quasi impossibilité de court-circuit.

Avantageusement les moyens complémentaires pour éliminer la prise en compte de faux contacts sont des moyens de calculs agencés pour retester régulièrement l'impédance globale et en déduire le moment de l'extraction, ce qui élimine les risques de faux positifs ou de faux négatifs, c'est à dire l'enregistrement d'une sortie de pilule ou de non sortie de pilule à tort.

Dans un mode de réalisation avantageux les portions frangibles comportent des trous, orifices ou évidements oblongs, c'est à dire ovales ou plus généralement non circulaires barrés d'une languette.

L'un des problèmes, qui n'était pas identifié et donc non résolu par l'art antérieur, est celui provenant de l'asymétrie systématique et peu perceptible des blisters du commerce.

En effet, pour satisfaire des exigences réglementaires de traçabilité impactant sa conception, un blister présente toujours une extrémité, définie comme l'intervalle entre la dernière rangée de pilules et l'un des petits bords du blister un peu plus longue que l'autre portion d'extrémité située du côté opposé et sur laquelle sont précisées les références légales telles que l'identification du lot du médicament concerné et la date de péremption du médicament.

Bien que pouvant atteindre trois à quatre millimètres, cette asymétrie est peu perceptible, tant visuellement que sur le plan tactile, et il est illusoire de demander à un utilisateur d'en tenir compte lors du collage d'un blister sur une plaquette.

La présente invention règle donc également cet inconvénient en proposant une plaquette souple dont les trous aménagés pour permettre le passage de chaque pilule et chaque fois associés à une partie frangible ne sont pas ronds, comme les alvéoles protectrices des pilules, mais oblongs de dimensions suffisantes pour permettre le décalage du fait d'un collage asymétrique.

Dans le cas de pilules qui sont elles-mêmes des gélules de forme ovale, les alvéoles du blister sont alors allongées, par exemple de la forme d'un rectangle dont les petits côtés sont arrondis.

Les trous correspondants aménagés dans la plaquette sont alors agencés en conséquence pour tenir compte de la position des pilules, dont le décalage entre deux positions peut atteindre plusieurs millimètres, liée donc à la possibilité de positionner un blister de deux manières.

Ici encore l'idée est de permettre d'obtenir une tolérance longitudinale dans lé positionnement du blister absorbant aisément les quelques millimètres de différence de longueur entre les deux extrémités de tout blister.

Dans un autre mode de réalisation avantageux de l'invention, la plaquette est transparente.

Faire figurer le nom du médicament bénéficiant de la mesure d'observance sur la plaquette, bien que souvent interdit, peut avoir de graves conséquences en cas d'erreur dé collage d'un blister sur un mauvaise plaquette.

Le nom du médicament figurant sur la face plane et collée du blister pour des raisons d'identification du médicament et de sécurité sanitaire, la transparence de la plaquette est suffisante pour présenter le résultat technique de permettre la lecture immédiate des références dudit médicament et sa parfaite identification.

Les patients étant souvent assujettis à suivre un traitement avec plusieurs médicaments et pouvant présenter un déficit visuel, il est important de ne pas créer un risque de confusion entre deux médicaments.

Dans un mode de réalisation avantageux, l'impossibilité de court-circuit est renforcée par la présence d'un vernis transparent ou le rajout sur la plaquette d'un matériau isolant, faisant partie des moyens complémentaires pour éliminer la prise en compte de faux contact.

Pour limiter encore les risques de rupture non voulue de la languette placée en regard des orifices de sortie des pilules, des renforts peuvent être prévus. Ces renforts sont alors et par exemple réalisés par des traces en cuivre étamé placé au verso du circuit électrique et non au recto afin de ne pas créer un risque de court-circuit.

Le risque de rupture de languette dépend de paramètres liés à chaque blister, à savoir sa taille celle des orifices de sortie des pilules, la forme, la taille et la dureté des pilules, les intervalles entre deux pilules, etc.

Le risque de rupture de languette est donc dévalué lors de l'élaboration de tout nouveau circuit électrique correspondant à un blister donné.

C'est l'évaluation de ce risque qui entraîne le recours ou non à un renfort.

Dans un autre mode de réalisation avantageux, la languette en regard du passage de chaque pilule est élargie en son milieu afin d'éviter le passage d'une pilule entre son bord et le bord interne du trou qui lui correspond.

Elle est conçue, comme le trou oblong de la plaquette, de façon à autoriser une tolérance autant latérale que longitudinale dans le positionnement du blister sur la plaquette.

Les renforts métalliques sont toujours calculés au plus juste de façon à la portée de l'homme du métier pour diminuer le moins possible la souplesse des languettes. En effet, moins la languette est rigidifiée, plus le passage d'une pilule après ouverture d'un interrupteur est facilitée.

Dans des modes de réalisation avantageux de l'invention, on a de plus recours à l'une et/ou à l'autre des dispositions suivantes :
- les moyens de fixation par collage sont formés d'une couche de colle protégée par un film pelable avant fixation du blister sur la plaquette
- le film pelable est en forme de bande repliée sur elle-même, dont une face d'une première moitié est collée sur le blister de façon aisément arrachable et l'autre moitié est repliée sur la dite première moitié et comprend une extrémité de préhension;
- le dispositif comporte de plus un support amovible en carton comprenant un orifice d'encastrage du boîtier contenant les moyens de calcul, une ouverture d'insertion du blister sur le support muni de la partie conductrice du circuit agencée pour bloquer le blister en translation par rapport au dit support, et des moyens de guidage et de maintien de l'extrémité de l'autre moitié du film pelable agencés pour permettre le dégagement de la face de la première moitié par traction dans le plan latéral, pour libérer la couche de colle et autoriser le collage du blister sur le support par simple pression ;
- l'ouverture d'insertion du blister a par exemple une taille correspondant exactement au blister concerné plus de l'ordre de 0,5 mm de jeu tout autour, pour assurer un bon positionnement au moment du collage et une grande simplicité et facilité intuitive d'utilisation pour le patient ;
- les moyens de fixation comprennent un boîtier muni d'un extrémité de protection des moyens de mesure de l'impédance et de calcul, et une partie allongée en matériau transparent, comportant un fond et un couvercle articulé à l'extrémité de protection, lesdits fond et couvercle comprenant des trous oblongs en vis-à-vis dés trous correspondant eux-mêmes aménagés dans la plaquette ;
- la plaquette auto-adhésive ne comprend que la partie collée sur la face plane d'un blister et est associée à un connecteur. La partie électronique idoine est donc dissociée et elle-même comprend un connecteur ce qui permettra à l'utilisateur de la relier avec la partie correspondant à la série d'interrupteurs avant l'extraction de la première pilule ;
- la plaquette est en tissu de verre et résine époxy, par exemple d'épaisseur de l'ordre du dixième de millimètre, ou en produit connu sous la dénomination Kapton.

Mais la plaquette peut également être en tout autre support selon l'invention souple en matière plastique ou autre formant un complexe compatible avec un contact avec un médicament ;
- l'inclinaison de la trame du tissu est agencée pour permettre des renforts de la languette traversant les trous oblongs et placée au dos de la partie active électriquement. Dans ce cas les zones de fragilité et de conduction de chaque interrupteur seront adaptées par l'homme du métier ;
- la partie conductrice du circuit imprimé est un aplat cuivré étamé ;
- les portions conductrices sont formées par des pattes à deux bras détachables l'une de l'autre par brisure de leur zone de jonction fragilisée par des perforations réalisées à son niveau dans la plaquette.

On notera ici que la rupture au niveau des zones fragilisées s'accompagne du risque de ne pas concerner la partie conductrice mais uniquement son support.

Si cela advenait, l'enregistrement de l'extraction de la pilule correspondante ne serait pas enregistrée. Avec une telle disposition le risque est encore minimisé.

Mais pour diminuer encore ce risque d'arrachement de la partie conductrice au niveau d'une zone frangible, l'invention propose, dans un mode avantageux, de prévoir une surface des deux bras plus importante que ce qui est nécessité par le passage du courant.

Rappelons que les interrupteurs sont actionnés grâce à la pression exercée sur la languette centrale lors de l'extraction d'une pilule par l'utilisateur et transmise intégralement aux parties frangibles.

Or quand un utilisateur extrait une pilule d'un blister, il exerce généralement une pression verticale pour pousser la pilule vers son orifice de sortie.

Le film protecteur se rompant subitement, l'utilisateur continue donc, dans son élan, à exercer une pression résiduelle qui dans l'invention est transmise à la languette centrale et consécutivement sert à ouvrir un interrupteur. De cette façon, l'action sur un interrupteur est certes volontaire mais n'impose pas d'effort physique supplémentaire de la part de l'utilisateur.

Mais le risque de faux positif peut alors advenir si l'interrupteur formé par une portion de circuit est rompu trop facilement, en particulier lors d'une manipulation maladroite par le patient alors qu'aucune pilule n'est éjectée.

De même, si l'interrupteur est insuffisamment frangible, c'est-à-dire ne se rompt pas facilement et simplement partiellement et donc insuffisamment pour que la pilule soit expulsée totalement, le patient est tenté d'extraire une autre pilule d'une autre alvéole. Il en résulte que la tentative de sortie de la première pilule a été enregistrée comme une sortie et donc une prise ; c'est un faux-positif.

Le patient peut ensuite oublier ultérieurement totalement la pilule, (particulièrement quand l'alvéole est, en plus d'être déformée, opaque et/ou que le patient présente des troubles visuels ou cognitifs), pensant simplement qu'il l'a déjà prise, et/ou la prendre plus tard quand il l'expulsera alors complètement. Dans ce cas, aucune extraction ne sera alors enregistrée par le système, puisque l'interrupteur irréversible a déjà fonctionné antérieurement. C'est un faux négatif.

L'ouverture d'un interrupteur doit donc être exclusivement consécutive au craquage du film fermant chaque alvéole lié à l'expulsion complète et volontaire d'une pilule hors son alvéole et sans risque que la languette transversale ne gêne le passage de la pilule.

En d'autres termes, il faut éviter que toute tentative infructueuse d'extraction d'une pilule ne s'accompagne de l'action d'un interrupteur.

Un tel résultat est encore obtenu comme indiqué dans le mode de réalisation de l'invention plus particulièrement décrit ici, en prévoyant un retestage régulier de l'impédance globale.

Dans un mode de réalisation avantageux et pour se faire on mesure par exemple périodiquement l'impédance, ou la tension aux bornes du circuit, ce qui revient au même, puis on moyenne les valeurs obtenues sur n mesures pour obtenir une tension moyenne Tᵢ, que l'on compare avec la valeur de tension moyenne précédente Tᵢ₋₁.

Si cette valeur Tᵢ-Tᵢ₋₁ est supérieure à une valeur seuil s de tension, on en déduit la sortie d'une pilule.

En d'autres termes, les moyens pour retester périodiquement et/ou régulièrement l'impédance globale comprennent des moyens de comparaison d'au moins une première tension moyenne Tᵢ sur n mesures, avec une tension moyenne précédente Tᵢ₋₁ sur n mesures.

Avantageusement, n est compris entre 5 et 10, par exemple 8, et/ou au moins deux couples de tensions moyennes consécutifs sont vérifiés pour valider une sortie de pilule.

L'invention, en créant des interrupteurs irréversibles, fiables et hautement frangibles, et de surcroît ne nécessitant pas un procédé de contrôle qualité trop important, générant un surcroît de coût, permet ainsi d'obtenir un résultat sans pratiquement aucun faux ;
- chaque portion conductrice est formée par deux sous-portions, formant deux interrupteurs disposés en série de part et d'autre de la portion frangible correspondante. La présence de deux interrupteurs-par trou de passage d'une pilule est un facteur garantissant une excellente frangibilité même en cas de positionnement imparfait du blister sur la plaquette. L'interrupteur le plus sollicité s'ouvrira en premier. Cela dépend du positionnement non prévisible du blister sur la plaquette et dé la façon, toujours très variable, dont l'utilisateur s'y prend pour extraire une pilule ;
- les deux interrupteurs d'une même portion frangible sont formés de façon similaire ;
- les interrupteurs sont formés par des languettes de plus grande largeur que le fil du circuit.

L'invention propose également un procédé de mesure de l'observance mettant en oeuvre le dispositif décrit ci-dessus.

Elle propose aussi un procédé de mesure de l'observance à l'aide d'une plaquette équipée d'un circuit électronique de détection et d'enregistrement du moment d'extraction des pilules appartenant à un blister, ladite plaquette étant formée d'un support sur lequel est imprimée la partie conductrice dudit circuit pour former des interrupteurs en parallèle le long d'un chemin conducteur, propres à être ouverts lorsque les pilules sont extraites manuellement par un utilisateur, ledit chemin conducteur étant à chaque fois agencé pour présenter une plus grande résistance que la portion en parallèle, caractérisé en ce que on fixe le support comprenant des portions frangibles réparties régulièrement le long de la partie conductrice par collage sur le blister, pour former des interrupteurs sensiblement au droit des pilules du blister, on teste régulièrement l'impédance du chemin conducteur et on ouvre un à un lesdits interrupteurs en éjectant manuellement les pilules au travers tout en enregistrant les variations d'impédance de la partie conducteur en corrélation avec les dates et heures desdites variations en utilisant les tests sur l'impédance pour éliminer les signes de faux positifs et/ou de faux négatifs.

Avantageusement, pour tester l'impédance on mesure périodiquement la tension Tᵢ, puis on moyenne les valeurs obtenues sur n mesures, que l'on compare avec les valeurs de tensions Tᵢ₋₁, obtenue par une moyenne précédente, et si cette valeur est supérieure d'une valeur s déterminée, on en déduit la sortie d'une pilule.

Dans un mode de réalisation avantageux n est compris entre 5 et 10, par exemple 8, et au moins deux couples de tensions moyennes successifs sont vérifiés pour valider une sortie de pilule.

Egalement avantageusement, on fixe le blister sur la plaquette de façon à ce que les parties conductrices des portions frangibles qui se brisent soient décalées par rapport aux pilules correspondantes.

Il est également décrit, dans la présente description, un kit de présentation d'un médicament permettant d'obtenir un meilleur résultat thérapeutique que ceux antérieurement connus, et ce bien que la molécule ou les molécules du médicament soient déjà connues, grâce à une galénique originale et nouvelle faisant appel au dispositif de l'invention.

On attend d'une molécule ou d'une association de molécules, correspondant à un principe actif et prescrite en situation de vie réelle, un effet thérapeutique similaire à l'effet pharmacologique observé en situation expérimentale où l'observance est généralement bien meilleure.

Dans la pratique, l'effet attendu ne correspond cependant jamais à l'effet observé en recherche clinique.

En dehors de raisons de type : erreurs diagnostiques ou autres erreurs dans le choix du patient (notamment un défaut du respect des contre-indications), erreurs dans la détermination de la posologie... la principale raison d'une sous ou non-efficacité d'un traitement médicamenteux chronique est le non-respect par le patient des consignes de prise données par le médecin c'est donc un problème d'observance difficile à repérer même par un médecin sensibilisé et rompu aux problèmes d'observance médicamenteuse.

C'est un problème de santé publique largement identifié par les autorités sanitaires qui exigent dorénavant des données sur l'usage en vie réelle des produits dans les années qui suivent leur mise sur le marché.

L'expérience montre que l'impact de santé publique d'un médicament (en d'autres termes, l'efficacité réelle d'un médicament sur une communauté) est bien moindre que ne le laisserait prévoir l'efficacité mesurée dans des conditions expérimentales, l'une des raisons étant que le médicament n'est pas pris correctement.

Il est possible d'améliorer l'impact de santé publique d'un médicament, et de rapprocher grâce à une meilleur observance, l'efficacité observée en vie réelle de celle obtenue dans les études expérimentales où, du fait de la formation spécifique des médecins investigateurs et du choix de patients identifiés comme bons observants, l'observance est toujours bonne.

Avec l'objectif de rapprocher le monde réel d'un monde idéal, un mode de réalisation consiste donc à préparer un conditionnement, ou une forme du type forme galénique, du médicament ou principe actif connu, en l'adjoignant de manière indissociable au support coercitif décrit ci-avant.

On obtient alors un nouvel effet du médicament, en combinaison, sur l'utilisateur, différent de ceux du médicament initialement conditionné plus simplement.

C'est ici une démarche identique à celle proposant :
- l'association fixe de deux médicaments sur une même plaquette, comme deux antihypertenseurs de classes pharmacologiques complémentaires ou d'un antihypertenseur et un hypocholestérolémiant ou antidiabétique ;
- l'adjonction d'un radical chimique à une molécule active pour modifier soit sa cinétique, soit son absorption, soit son action pharmacodynamique ;
- la sélection d'un composant lévogyre plutôt que dextrogyre ou inversement...

Par exemple, s'agissant de l'amlodipine présentée à titre de paradigme, antihypertenseur normalisant la pression artérielle des sujets hypertendus, les études cliniques mettent en évidence une efficacité chez plus de deux patients sur trois.

Dans la vie réelle, un patient sur trois seulement, est correctement pris en charge par l'amlodipine sous sa forme galénique actuelle. Augmenter ce taux en le rapprochant du taux observé dans les études expérimentales est souhaitable.

Un grand nombre de patients hypertendus sont considérés par leur médecin comme des hypertendus résistants, c'est-à-dire des patients qui ne répondent pas pharmacologiquement aux traitements médicamenteux.

La pharmacorésistance n'est souvent en fait qu'un déficit d'observance facile à corriger s'il est identifié en tant que tel.

Comme le souligne toutes les recommandation internationales consacrées à l'HTA, la première chose à faire, face à un patient hypertendu considéré comme pharmacologiquement résistant, est plutôt de contrôler son observance médicamenteuse ce qui est illusoire en pratique réelle et renforce l'intérêt, pour la santé collective, de l'utilisation du kit décrit ici.

En fait, sur une centaine de patients étudiés qui bénéficient d'un médicament dont la forme galénique est associée et comporte le monitoring électronique de l'observance telle que précisée ci-avant avec la présente invention, on constate que les résultats sont bien meilleurs que ceux obtenus avec la forme traditionnelle en simple pilule sans changer de classe pharmacologique et sans modifier la posologie.

Il est ainsi établi que la combinaison molécule et dispositif de mesure de l'observance selon l'invention, est en soit plus efficace sur le plan clinique, que la molécule isolée.

En d'autres termes, l'amlodipine seule et l'amlodipine en combinaison avec le monitoring électronique selon l'invention sont deux produits différents, le deuxième trouvant une application particulièrement intéressante pour soigner l'hypertension considérée comme pharmacologiquement résistante.

Une telle forme galénique particulière, que l'on peut préférer définir par un Kit de présentation spécifique est valable pour tous les antihypertenseurs mais aussi pour tous les médicaments correspondant à des traitements prolongés où la mauvaise observance est l'une des principales causes d'échec thérapeutique chez les patients ambulatoires. Toute les pathologies sont concernées même celle qui mettent en jeu le pronostic viral : immunosuppresseur, anticancéreux, médicaments du SIDI...

En résumé, la combinaison d'une molécule avec un moyen d'amélioration de l'observance véritablement efficace, et utilisable par tout patient ambulatoire, constitue bien un nouveau produit.

Il est donc également décrit un kit de présentation d'une composition médicamenteuse, caractérisée en ce qu'elle comporte un principe actif correspondant à une molécule ou une association de molécules présentant une activité pharmacologique déterminée sous la forme galénique d'une ou plusieurs pilules prises en combinaison avec leur conditionnement en forme de blister intégrant de façon inamovible un circuit électronique de détection d'extraction de pilules. Ledit blister intègre un support souple sur lequel est imprimé la partie conductrice dudit circuit, ladite partie conductrice comportant des portions conductrices identiques réparties régulièrement en parallèle le long d'un chemin conducteur, ledit chemin conducteur étant à chaque fois agencé pour présenter une plus grande résistance électrique que la portion en parallèle correspondante, ledit support comprenant des portions frangibles, en bordure desquelles sont imprimées ces portions conductrices, lesdites portions frangibles étant réparties régulièrement de sorte que la portion frangible de la plaquette et la portion conductrice correspondante sont rompues simultanément lorsqu'une pilule est extraite et comportant des moyens de mesure de l'impédance de la partie conducteur associés a des moyens de calcul.

La plaquette peut aussi ne comporter que les interrupteurs, chacun correspondante à une pilule, reliés à un connecteur. La plaquette dans cette présentation sera connecté à un module électronique comportant l'autre partie des moyens de mesure et d'enregistrement des données d'observance.

Les résistances peuvent, selon les cas, soit être placées sur le blister intégrant les interrupteurs, soit sur le module électronique à connecter au blister.

Avantageusement, le principe actif est, comme dans l'exemple ci-dessus mentionné, utilisé pour le traitement d'une maladie identifiée comme posant des problèmes d'observance de la part des patients.

également avantageusement le principe actif est une molécule ou une association de molécules connue pour leur action pharmacologique.

L'invention sera mieux comprise à la lecture de la description qui suit de modes de réalisation donnés ci-après à titre d'exemples non limitatifs.

La description se réfère aux dessins qui l'accompagnent dans lesquels :
La figure 1 montre schématiquement un dispositif selon l'invention tel qu'utilisé selon le procédé plus particulièrement décrit ici.
La figure 2 est une vue en plan d'une plaquette appartenant à un dispositif selon un mode de réalisation de l'invention.
Les figures 2a et 2b illustrent deux modes de réalisation de portions frangibles et de portions conductrices selon l'invention.
La figure 3 est une vue en perspective d'une variante, comportant un support boîtier dans lequel est inséré le blister, dénué ou non de couvercle.
La figure 4 est une vue latérale du dispositif de la figure 3, montrant l'éjection d'une pilule au travers de la plaquette insérée dans les supports.
La figure 5 est une vue en plan, partielle d'un autre mode de réalisation des portions conductrices ou zones frangibles selon l'invention.
La figure 6 est une vue de dessus en perspective montrant un dispositif selon un autre mode de réalisation de l'invention.
Les figures 7A et 7B montrent en perspective, en vue de dessus et en vue de dessous, le dispositif de la figure 6 comportant de plus un support amovible.
La figure 8 montre le dispositif de la figure 6 lors de son extraction du support amovible des figures 7, après collage du blister.
La figure 9 est une vue en perspective du dispositif de la figure 6 extrait avec blister.
La figure 10 est une vue de dessous du dispositif de la figure 6 avec blister.
La figure 11 est un schéma bloc montrant un mode de réalisation du test anti-faux positifs, mis en oeuvre selon l'invention.

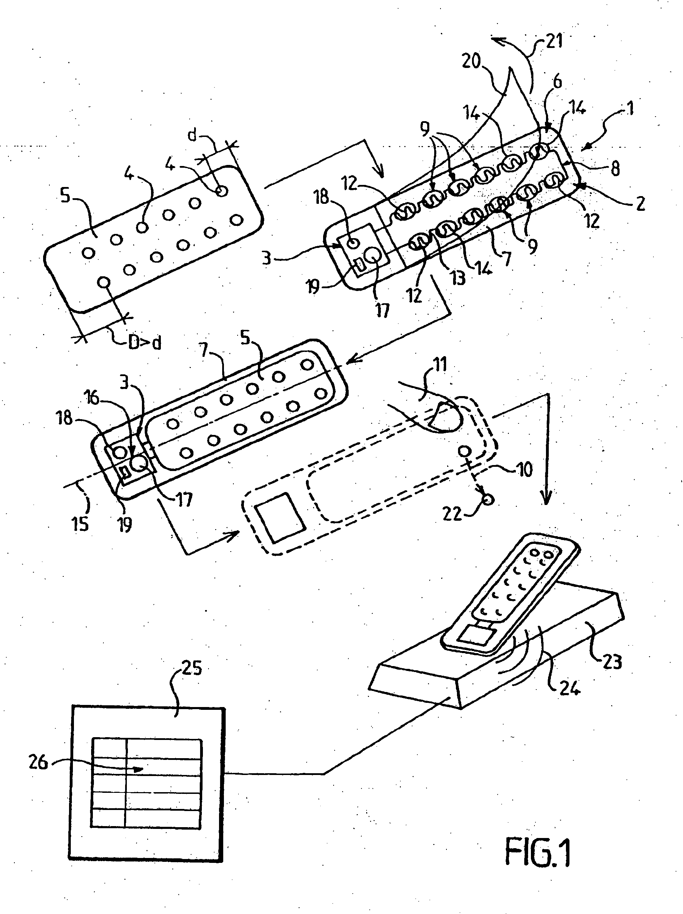

La figure 1 montre un dispositif 1 de mesure de l'observance comprenant une plaquette 2 équipée d'un circuit 3 électronique de détection et d'enregistrement du moment d'éjection des pilules 4 appartenant à un blister 5.

Le blister 5 est formé de façon connue d'une feuille souple comprenant par exemple deux rangées parallèles de six pilules 4.

Le dispositif comprend des moyens 6 (colle enduisant la face supérieure de la plaquette) de fixation du blister à la plaquette. La plaquette est formée d'un support souple 7 sur lequel est imprimée la partie conducteur 8 du circuit électronique pour former des interrupteurs 9 propres à être ouverts lorsque les pilules sont éjectées manuellement (voir flèche 10) par un utilisateur dont le pouce 11 est représenté sur la figure 1.

Plus précisément, le circuit électronique 3 comporte des portions conductrices 12 identiques réparties régulièrement le long du chemin conducteur 13.

Le support est souple, flexible, transparente sensiblement rectangulaire, et comprend des portions frangibles 14, oblongues, en bordure desquelles sont imprimées les portions conductrices 12, réparties régulièrement pour être sensiblement au droit d'une pilule 4 correspondante lorsque le blister 5 est fixé sur la plaquette, de sorte que la portion frangible de la plaquette et la portion conductrice correspondantes sont rompues simultanément lorsqu'une pilule est éjectée.

La partie conductrice est constitué d'un aplat cuivré étamé adhérent à son support souple de 0,2 à 0,5 mm de largeur.

Le support transparent est un tissu de fibres de verre, d'environ un dixième de millimètre d'épaisseur, les fibres (noyées dans de la résine époxy) étant, par exemple réparties avec un pas de l'ordre de 10 fibres par millimètre, formant un angle de 90° ou 0° selon la trame considérée par rapport à l'axe 15 de la plaquette.

Le circuit 3 comporte des moyens 16 de mesures de l'impédance globale de la partie conducteur pour en déduire le moment de l'extraction des comprimés ou pilules.

Ces moyens 16 comportent une pile d'alimentation électrique 17, une puce 18 électronique de mesure programmée en conséquence et un ensemble 19 de constituants électroniques : mémoire, quartz, résistance et antenne à radiofréquence (RFId) notamment.

Les moyens 16 sont constitués d'éléments connus, raccordés et programmés de façon à la portée de l'homme du métier.

Les moyens 6 de fixation sont formées d'une couche de colle protégée par un film plastique 20 pelable (flèche 21) avant fixation du blister 5 sur la plaquette.

Avantageusement une couche d'isolant électrique (non représentée) et/ou de résine ou de vernis isolant, est ajoutée au préalable entre la couche de colle et la plaquette.

Ainsi, quand le patient prend une pilule 22, la date et l'heure exacte sont enregistrées par la puce 18 dans la mémoire 19. Un appareil lecteur à radiofréquence 23, utilisant pair exemple les ondes radio électromagnétique 24, est prévu chez le médecin, et permet une lecture directe de la mémoire 19 et de la puce électronique, pour être visualisée sur l'écran 25 selon une présentation spécifique 26 donnant instantanément l'historique des prises médicamenteuses.

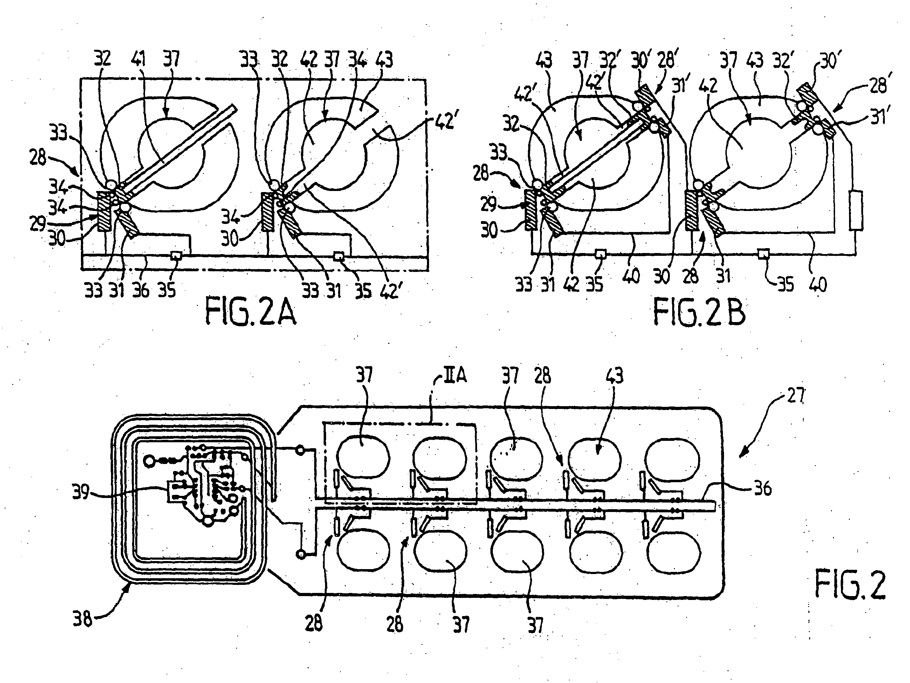

On a représenté sur la figure 2 un autre mode de réalisation d'une plaquette 27 selon l'invention.

Par la suite on utilisera les mêmes numéros pour désigner des références identiques ou similaires.

Ici les portions conductrices 28 situées juste à la périphérie de chaque orifice d'extraction des pilules du blister, formées par des évidements oblongs ou ovales 37 dans la plaquette, et propres à être rompues lors de chaque extraction d'une unité thérapeutique par un utilisateur, sont formées (cf. figures 2A et 2B) par des pattes 29 à deux bras 30 et 31 conductrices, de plus grosse largeur que le fil conducteur de liaison, par exemple de cinq à dix fois plus large, reliées entre elles par un portion intermédiaire 32 (située dans la portion frangible) et détachables l'une de l'autre, par brisure de leur deux zones 33 de jonction avec la portion 32, fragilisées par des perforations 34 réalisées à leur niveau dans la plaquette.

Des résistances 35 ramenées sur le chemin conducteur 36, en parallèle avec les portions conductrices 28 bloquent le passage, et obligent le courant à passer par l'intermédiaire des pattes à deux jambes détachables et des zones de jonction 33.

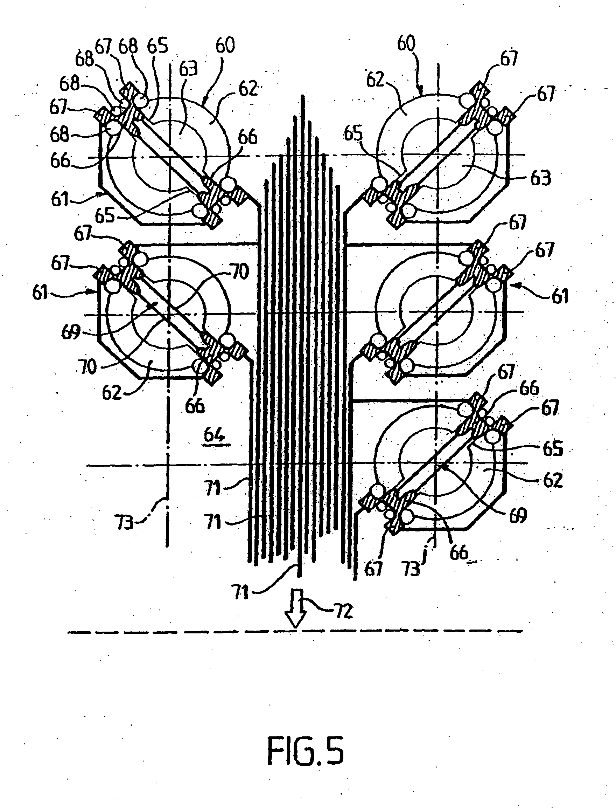

Dans un mode de réalisation, ces résistances peuvent être ramenées à proximité des moyens 16 à l'extrémité de la plaquette, ce qui entraîne alors la nécessité de multiplier les chemins conducteurs sur la plaquette (voir ci-après figure 5).

Lorsqu'une rupture se fait, le courant est amené à passer par la partie plus résistante du circuit (résistance 35), ce qui entraîne une augmentation ou incrémentation de l'impédance, correspondant à la valeur d'une résistance, mesurée par le circuit électronique et la puce (non représentée) connectés à l'extrémité 38 de la plaquette via la portion 39 de circuit imprimé de façon connue en elle-même.

Dans un mode de réalisation avantageux (figure 2B), chaque portion conductrice 30 est formée par deux sous-portions 28 et 28' formant deux interrupteurs disposés en série (liaison 40) de part et d'autre de la portion frangible 37 correspondante, de forme oblongue, de dimensions plus importantes que celles des pilules correspondantes à extraire et/ou de leurs alvéoles de rétention dans le blister correspondant.

La sous portion 28' est similaire à la sous portion 28, et comprend deux bras 30' et 31', reliées par une portion intermédiaire 32' craquable, car fragilisée comme la sous portion 28.

Ainsi que la rupture du blister se fasse d'un côté ou de l'autre, le risque de défaut positif est encore minimisé.

L'interrupteur placé en périphérie de l'orifice de sortie de la pilule qui lui correspond, formé par les parties conductrices 28, en parallèle du chemin conducteur principal 36, comme représentée sur les figures 2A et 2B permet, en combinaison avec les moyens complémentaires pour éliminer la prise en compte de faux contacts, d'éliminer ou de minimiser ces risques de faux contacts pouvant éventuellement advenir dans le cas fréquent où le blister comporte une feuille métallique conductrice de fermeture.

En effet, associé au fait que les parties conductrices sont du côtés de la plaquette opposé au côté en contact direct avec le blister, le positionnement excentré fait qu'on limite le risqué d'avoir une portion du circuit (formé par exemple par un fragment de cuivre étamé), qui rentre en contact avec le blister.

Dans un mode de réalisation, une zone 41 formée par une encre, ou un fil cuivré, avantageusement placé de l'autre côté de la plaquette, au verso du circuit, permet de renforcer la partie centrale 42, placée dans l'évidemment 43 de la plaquette, sur le passage de la pilule, ce qui évite tout risque de rupture ailleurs qu'au niveau des interrupteurs 28.

La partie centrale 42 est adaptée à chaque série différente de blisters. Elle est par exemple circulaire, reliée au reste de la plaquette par deux bras opposés 42', dont les extrémités comportent les parties 32 et 32' propres à être rompues, et occupe entre la moitié et le quart de la surface de l'évidemment 43.

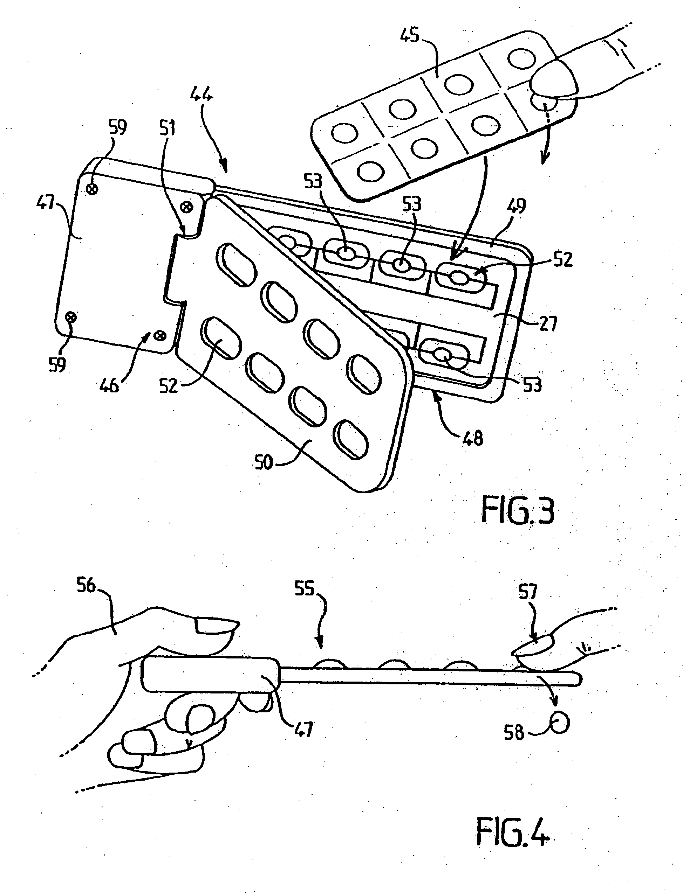

On a représenté sur les figures 3 et 4 un autre mode de réalisation d'un dispositif selon l'invention, montrant d'autres moyens 44 de fixation du blister 45 du commerce sur la plaquette.

Ils comprennent un boîtier 46, muni d'une boîte d'extrémité 47 de protection des moyens de mesure, des moyens horodateur et des moyens de comptage (formés par la partie électronique et logicielle), et une partie allongée 48 en matériau transparent, comportant un fond 49 et un couvercle 50, articulé en 51 à l'extrémité 47 de protection. Le couvercle 50 n'est pas systématique. L'existence d'une enduction de colle avec film pelable est possible. Le fond peut comprendre utilement des bords surélevés servant de guidage pour aider au bon positionnement du blister.

Le fond 49 et le couvercle 50 comprennent des orifices oblongs 52 en vis-à-vis des portions frangibles 53 de la plaquette 27, du type de celle décrite ci-avant par exemple en référence aux figures 2.

On a représenté sur la figure 4 le fonctionnement du dispositif 55 muni de tels moyens 44 de fixations rigides. Le dispositif est tenu d'un côté par la main 56 de l'utilisateur qui n'a qu'à appuyer (en 57) pour éjecter la pilule 58 au travers du trou oblong 52 en vis-à-vis du fond de la plaquette, en rompant alors le blister et la position frangible en vis-à-vis déclenchant une extraction.

La figure 5 montre un autre mode de réalisation des parties frangibles 60 et portions conductrices 61 d'un dispositif selon l'invention.

Ici, les portions frangibles 60 comportent un évidemment circulaire 62, une pastille centrale 63 circulaire de plus petit diamètre que l'évidemment, reliée au reste de la plaquette 64 par des barres rectangulaires 65 dont l'extrémité comporte les zones de jonctions conductrices 66 avec les pattes à deux jambes détachables 67. La fragilité de ces zones de jonctions conductrices et détachables est créée, comme en référence aux figures 2, par des perforations 68, par exemple quatre perforations de diamètres calculés pour permettre une rupture adaptée, à savoir deux trous de plus fort diamètre sur l'extérieur, et de plus faible diamètre sur l'intérieur des jambes 77.

Dans le mode de réalisation de la figure 5, une languette 69 formée par deux fils 70 résistants disposés sur la plaquette 64 sur la face opposée à celle des portions conductrices 61, pour ne pas créer d'interférences électriques, traverse la zone centrale de part en part entre les deux zones de jonction 66.

Plutôt que mettre les résistances 35 en parallèle en vis à vis de chaque portion conductrice, comme dans le cas des modes de réalisation de la figure 2, celles-ci sont ramenées, par le biais des liaisons 71, constituées par des fils métalliques parallèles eux, à proximité du microprocesseur (non représenté) situé dans la direction 72.

De façon étonnante et avantageuse, la forme des zones de jonction 66 conductrices est en forme de U avec des bords du U de longueur par exemple inégales.

Dans un mode de réalisation classique, pour blister du commerce, la distance entre les deux axes 73 de portion frangible est par exemple 22 mm.

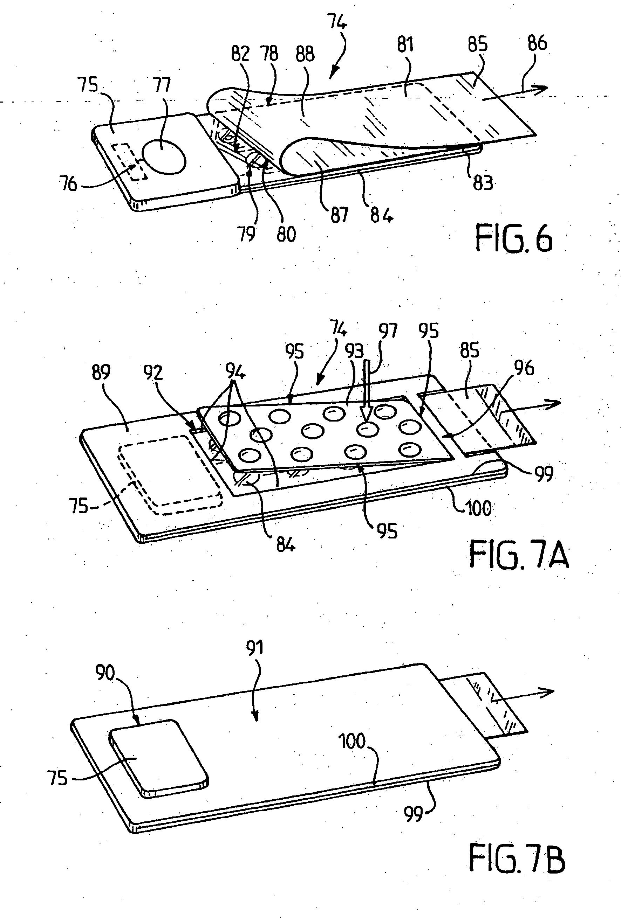

La figure 6 montre en perspective du dessus un dispositif 74 comprenant un boîtier en plastique 75 contenant le moyens de calcul 76 comportant une puce RFID symbolisée en 77.

Ce boîtier en plastique est solidaire de façon amovible du support 78, équipé du circuit électronique de détection sur lequel est donc imprimé la partie conductrice 79 pour former des interrupteurs 80 propres à être ouverts lorsque les pilules sont extraites manuellement par un utilisateur. La partie conductrice 79 du circuit est formée comme décrit en référence par exemple à la figure 5.

Elle ne sera donc pas détaillée plus avant.

Le dispositif 74 comporte de plus, une pellicule double 81 arrachable constituée en papier kraft légèrement plastifié ou en feuille de matière plastique apposée sur la face supérieure 82 du circuit, à laquelle il est collé par l'intermédiaire d'une mince pellicule de colle 83.

La plaquette support 84 est, quant à elle, transparente comme cela sera plus précisément décrit ci-après.

La pellicule double arrachable 81 comporte une extrémité 85 de traction par un utilisateur, qui va lui permettre de peler cette pellicule en tirant dans le sens de la flèche 86, comme montré sur la figure de façon à libérer la face supérieure 82 d'accès aux interrupteurs.

Plus précisément, la pellicule ou film pelable 81 en forme de bande repliée sur elle-même de même largueur que la plaquette 84 comporte une première moitié 87 collée sur la face 79 et une deuxième moitié 88 munie de l'extrémité décalée 85.

On a représenté sur les figures 7A et 7B le dispositif 74 mis en place à l'intérieur d'un support amovible en carton 89 comportant un orifice d'encastrage 90 du boîtier 75 sur la face arrière 91 du support amovible.

Celui-ci comporte de plus une ouverture d'insertion 92 du blister 93 pour collage sur la plaquette 84 munie de la partie conductrice du circuit, agencée pour bloquer le blister en translation par ses bords 94, l'orifice venant en butée sur les bords périphériques 95 du blister. Le support en carton 89 comporte, de plus, des moyens de guidage 96 et de maintien de l'extrémité 85 de la moitié de la pellicule double arrachable, agencés pour permettre le dégagement de la face de la première moitié et libérer la couche de colle pour autoriser le collage du blister 93 sur le support par simple pression (flèche 97).

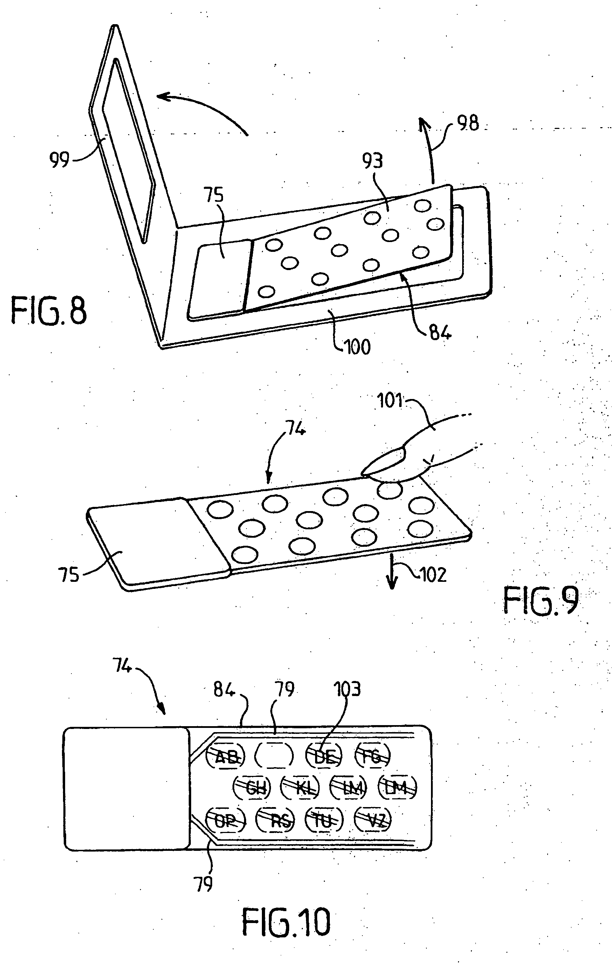

Une fois le blister collé (cf. figure 8) l'ensemble blister 93, plaquette support transparente 84 et boîtier 75 contenant les moyens de calculs 76 peut alors être extrait (flèche 98), après ouverture du support amovible en carton constitué de deux feuilles 99 et 100 articulées, appliquées l'une sur l'autre pour prendre le dispositif en sandwich, à savoir une feuille supérieure 99, en carton ondulé double face de 2 mm d'épaisseur, rectangulaire, ajourée par l'ouverture 92, et une feuille inférieure similaire, ajourée par l'orifice d'encastrage 90.

Le dispositif 74 muni de son blister 93 est représenté sur la figure 9 et va permettre par pression avec le doigt 101 d'extraire les pilules une par une vers le bas 102.

On a représenté sur la figure 10 en vue de dessous, le dispositif 74 de la figure 6 montrant la partie conductrice 79 du circuit sur la plaquette support transparente 84, permettant de voir apparaître les mentions 103 de l'étiquette du médicament en transparence, ce qui autorise son identification.

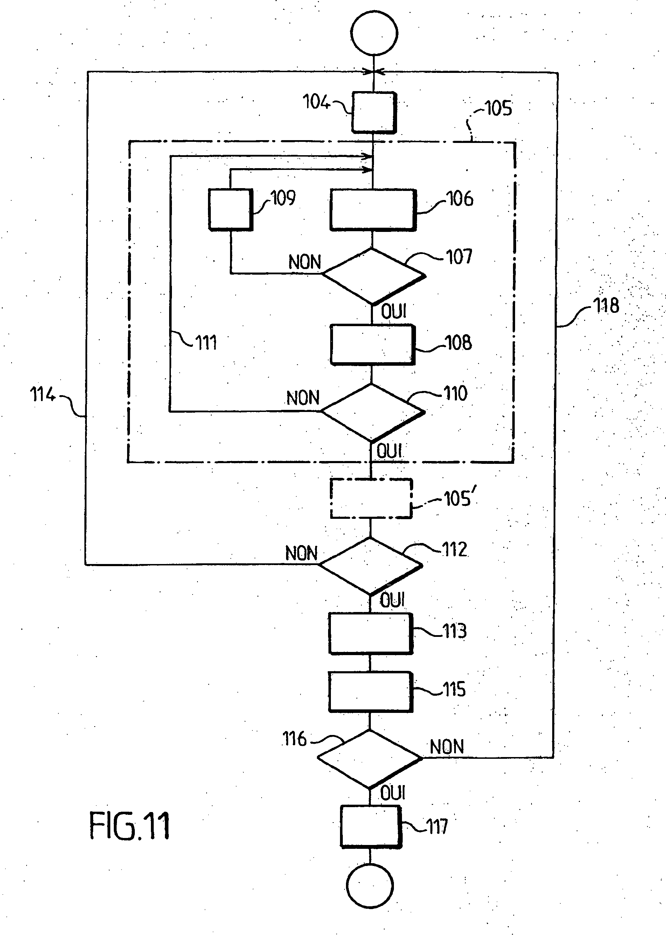

On va maintenant décrire en référence à la figure 11 les moyens de calculs et plus particulièrement de tests selon un mode de réalisation de l'invention permettent d'éviter les faux positifs et/ou faux négatifs de façon extrêmement efficace.

On initialise tout d'abord dans un premier temps en 104 le processus de suivi.

Puis, est réalisé un cycle 105 (trait mixte) de mesures de tension, de la façon suivante. On mesure en 106 de façon périodique, par exemple toutes les secondes, la tension T du circuit du dispositif.

Lorsque le nombre de mesures est inférieur à n (test 107), on stocke la mesure en 109, et on recommence le test.

Si le nombre de mesure devient égal à n, on effectue en 108 la moyenne des tensions T indice i sur les n mesures à partir des mesures stockées en 109, valeur moyenne Tᵢ que l'on stocke alors dans une mémoire tampon du circuit électronique inclus dans le boîtier en plastique.

On effectue alors le test 110 dans lequel on compare les moyennes de T indice i et T indice i-1.

Si cette comparaison montre que cette valeur est inférieure à une valeur seuil déterminée au préalable, on effectue un nouveau cycle de tests identique au cycle 105 en 105', sinon (ligne 111), on revient à la mesure 106 périodique de la tension.

Dans le cas où la deuxième mesure moyennée de tension est toujours différente de la tension indice i moins 1 (test 112) au delà de la valeur seuil, on considère qu'il y a effectivement prise d'une pilule et on stocke (bloc 113) les éléments la concernant dans la mémoire des moyens de calcul. Sinon on réitère le processus en réinitialisant les séries de mesures en 104 (ligne 114).

Lorsque cette mesure de prise est stockée, elle est ensuite éventuellement soumise à différents calculs (blocs 115) qui vont pouvoir être par exemple copiés par le biais d'une lecture de la puce RFID sur un dispositif externe non représenté.

A la fin de l'utilisation de la plaquette (test 116) on transmet la plaquette en 117 au médecin pour analyse.

Sinon on réinitialise (ligne 118) le fonctionnement.

A noter que l'utilisation d'une puce RFID n'est en aucun cas indispensable. Elle permet simplement un transfert facile d'informations au médecin.

On va maintenant décrire plus précisément un exemple de réalisation du fonctionnement de l'élimination de faux positifs et/ou négatifs.

Pour se faire on a par exemple mis en mémoire trente seuils correspondant aux trente prises à effectuer sur une plaquette.

Trente prises est en général un nombre maximum de pilules pour les blisters du commerce.

Plus généralement les blisters comportent quatorze ou quinze pilules.

Pour se faire on mesure la tension aux bornes du circuit électronique, tension qui augmente au fur et à mesure des prises, car chaque fois qu'il y a une prise un interrupteur s'ouvre et le courant ne passe plus directement mais à travers une résistance supplémentaire.

En d'autres termes, le circuit augmente sa résistance (également qualifiée d'impédance) au fur et à mesure des prises.

La problématique que se propose de résoudre cet algorithme plus particulier est en fait d'éviter les faux positifs.

En effet, il a pu être observé qu'il y avait de temps en temps une mesure faussée dont la raison exacte était difficile à déterminer.

Celle-ci peut venir de court-circuits, le circuit étant peu protégé, par exemple juste par une couche de colle, et peut donc venir au contact de la partie aluminium du blister quand les interrupteurs sont rompus.

Par ailleurs, dans le cas d'une utilisation de puce RFID, le système peut détecter de fausses mises en communication et tirer également sur la consommation de la pile qui est incluse dans le dispositif électronique.

Cette pile étant une pile de faible puissance, elle peut alors éventuellement transmettre une tension insuffisante dans le circuit et simuler une prise ou une absence de prise alors que cette dernière a ou n'a pas eu lieu.

Quoiqu'il en soit cette identification de problèmes rencontrés dans le cadre d'une utilisation de blisters du commerce, par des utilisateurs normaux avec ce type de dispositif, est nouvelle.

L'invention le gère par des moyens tels que précisés ci-avant pris en combinaison, et notamment, dans le mode de réalisation plus particulièrement décrit, par des moyens de calcul algorithmiques mettant en oeuvre des tests successifs, le contrôle étant réalisé au moins une deuxième fois, éventuellement une troisième fois, etc.

On ne conclura à une prise que lorsque deux mesures successives de moyennes de T, c'est à dire en l'espèce dans l'exemple mentionné deux fois huit mesures moyennées, permettent de conclure consécutivement à la dite prise.

Avec le dispositif selon ce mode de réalisation de l'invention, on a ainsi pu constater un seul faux positif sur plus de six cent prises, la fiabilité pouvant encore être améliorée en augmentant le nombre de cycles 105 de contrôle.

Un autre avantage inattendu provient du fait que, si une connexion ou plusieurs se referment alors qu'il n'y a pas eu de nouvelles prises, par exemple du fait de la manipulation de la plaquette, cela ne crée pas d'erreurs puisque les prises sont stockées en mémoire.

On va maintenant décrire le fonctionnement du dispositif et du procédé selon le mode de réalisation de l'invention plus particulièrement décrit ici en référence à la figure 1.

L'utilisateur (patient) à qui un médicament correspondant au blister 5 a été prescrit, se voit fournir, soit par son médecin, soit par le pharmacien, soit directement par le fabricant du blister, un dispositif 1 selon l'invention.

Celui-ci, fabriqué en grande série, a un coût faible, compte tenu notamment de la simplicité de la puce 17 dite RFID (initiales anglo saxonnes de Radio-Frequency Identification) qui comporte les moyens de calcul, de stockage et de transmission des informations d'enregistrement.

L'utilisateur détache la pellicule 20 sur le dispositif qu'il colle ensuite sur le blister 5, sans se préoccuper du côté du blister plus long au moins long, compte tenu des surfaces frangibles oblongues 9.

Lé blister est collé, pilules vers le dessus, la face en feuille d'aluminium étant du côté du dispositif.

Grâce au fait que ce dernier est transparent, les indications figurant au dos du blister sont lisibles au travers de la plaquette 2.

L'utilisateur, au fur et à mesure de son traitement extrait ensuite les pilules 22 du Kit médicamenteux conférant une sorte de forme galénique inamovible et particulière au médicament concerné en pressant manuellement sur le blister.

En appuyant sur le blister, la pilule rigide craque le film d'aluminium et en même temps l'une et/ou l'autre des parties de jonction.

L'impédance du circuit est alors augmentée ce qui active le compteur et les enregistrements des prises médicamenteuses.

A la fin des prises, le blister/dispositif est donné au médecin qui, de façon connue, interroge la puce RFID via le dispositif 23, de façon à obtenir les données concernant les prises.

Sachant qu'il a été monitoré de façon infalsifiable dans ses prises de médicaments, l'utilisateur en a induit une conduite plus respectueuse de la prescription, ce qui a permis une plus grande efficacité du médicament, chez l'utilisateur déambulatoire.

Comme il va de soi et comme il résulte également de ce qui précède, la présente invention n'est pas limitée aux modes de réalisation plus particulièrement décrits. Elle en embrasse au contraire toutes les variantes dans la limite des revendications, et notamment celles où le boîtier qui contient les moyens de calcul est amovible et réutilisable, où les pilules sont des comprimés ou des gélules, ou plus généralement des unités thérapeutiques (ampoules...) ou éléments (seringues...) conditionnés en blister, ou encore celles où le blister de la composition médicamenteuse, en sus des pilules, ne comporte que le circuit des interrupteurs plus ou moins les résistances et non la partie électronique.

Munie lors de sa fabrication d'un connecteur, la composition médicamenteuse sera connectée ultérieurement par l'utilisateur à un module électronique par un connecteur idoine, pour donner le kit plus particulièrement décrit ici. En d'autres termes, la partie de la plaquette portant notamment les moyens de calculs est détachable du reste et/ou amovible.

## Revendications

1. Dispositif (1) de mesure de l'observance comprenant une plaquette (2, 27) équipée d'un circuit (3) électronique de détection et d'enregistrement du moment d'extraction des pilules (4) appartenant à un blister (5) et des moyens (6, 44) de fixation du blister à la plaquette, la plaquette étant formée d'un support (7) sur lequel est imprimée par dépôt ou collage d'un fil ou film, métallique la partie conductrice (8) dudit circuit pour former des interrupteurs (9) propres à être ouverts lorsque les pilules sont extraites manuellement par un utilisateur, ladite partie conductrice comportant des portions conductrices (12, 28) identiques réparties régulièrement en parallèle le long, d'un chemin conducteur (13), ledit chemin conducteur étant à chaque fois agencé pour présenter une plus grande résistance que la portion en parallèle, **caractérisé en ce que** le support est souple, flexible, **en ce qu'**il comprend des portions frangibles (14) au bord desquelles sont imprimées lesdites portions conductrices (12) réparties régulièrement pour correspondre à une pilule correspondante (4), de sorte que les portions frangibles de la plaquette associées à une portion conductrice sont rompues lorsqu'une pilule est extraite, **en ce que** les moyens de fixation sont par collage, **en ce qu'**il comporte des moyens complémentaires pour éliminer la prise en compte de faux contacts, **en ce que** le circuit comporte des moyens (16) de mesure de l'impédance globale de la partie conducteur et des moyens de calcul pour en déduire le moment de l'extraction d'une pilule, et **en ce que** les moyens complémentaires pour éliminer la prise en compte de faux contacts comprennent des moyens de calcul agencés pour retester régulièrement l'impédance globale de façon à écarter les risques de faux positifs.

2. Dispositif selon la revendication 1, **caractérisé en ce que** les portions frangibles (14) comportent des évidements oblongs (37, 43), barrés d'une languette (42).

3. Dispositif selon la revendication 2, **caractérisé en ce que** la languette (42) placée au regard des orifices comporte un renfort (41).

4. Dispositif selon l'une quelconque des revendications 2 et 3, **caractérisé en ce que** la languette (42) est élargie en son milieu.

5. Dispositif selon l'une quelconque des revendications précédentes, **caractérisé en ce que** la plaquette (2, 27) est transparente.

6. Dispositif selon l'une quelconque des revendications précédentes, **caractérisé en ce que** la plaquette est recouverte d'un vernis transparent ou d'un matériau isolant sur le circuit électronique pour former au moins partiellement lesdits moyens complémentaires.

7. Dispositif selon l'une quelconque des revendications précédentes, **caractérisé en ce que** les moyens (6) de fixation sont formés d'une couche de colle (6) protégée par un film (20) pelable avant fixation du blister sur la plaquette.

8. Dispositif selon la revendication 7, **caractérisé en ce que** le film pelable est en forme de bande repliée sur elle-même, dont une face d'une première moitié est collée sur le blister de façon aisément arrachable et l'autre moitié est repliée sur la dite première moitié et comprend une extrémité de préhension.

9. Dispositif selon la revendication 8, **caractérisé en ce que** le dispositif comporte de plus un support amovible en carton comprenant un orifice d'encastrage du boîtier contenant les moyens de calcul, une ouverture d'insertion du blister sur le support muni de la partie conductrice du circuit agencée pour bloquer le blister en translation par rapport au dit support, et des moyens de guidage etc de maintien de l'extrémité de l'autre moitié du film pelable agencés pour permettre le dégagement de la face de la première moitié par traction dans le plan latéral, pour libérer la couche de colle et autoriser le collage du blister sur le support par simple pression.

10. Dispositif selon l'une quelconque des revendications précédentes, **caractérisé en ce que** la plaquette est en tissu de verre et résine époxy d'épaisseur de l'ordre du 10^{ème} de mm, ou en matériau connu sous la dénomination Kapton.

11. Dispositif selon l'une quelconque des revendications précédentes, **caractérisé en ce que** la partie conductrice du circuit imprimé est un aplat cuivré étamé.

12. Dispositif selon l'une quelconque des revendications précédentes, **caractérisé en ce que** les portions conductrices (28), sont formées par des pattes (29) à deux bras (30, 31) reliées par une portion intermédiaire 32 et détachables l'un de l'autre par brisure de leurs zones de jonction (33) fragilisée par des perforations (34) réalisées à son niveau dans la plaquette.

13. Dispositif selon l'une quelconque des revendications précédentes, **caractérisé en ce que** chaque portion conductrice (30) est formée par deux sous portions (28, 28') formant deux interrupteurs disposés en série de part et d'autre de la portion frangible correspondante.

14. Dispositif selon la revendication 13 dépendant de la 11, **caractérisé en ce que** les deux interrupteurs (28, 28') d'une même portion frangible sont formés de façon similaire.

15. Dispositif selon l'une quelconque des revendications précédente, **caractérisé en ce que** les moyens pour retenter périodiquement et/ou régulièrement l'impédance globale comprennent des moyens de comparaison d'au moins une première tension moyenne T₁ sur n mesures avec une tension moyenne précédente Tᵢ₋₁.

16. Procédé de mesure de l'observance à l'aide d'une plaquette (2, 27) équipée d'un circuit électronique (3) de détection et d'enregistrement du moment d'extraction des pilules appartenant à un blister (5), ladite plaquette étant formée d'un support (7) sur lequel est imprimé la partie conductrice dudit circuit pour former des interrupteurs en parallèle le long d'un chemin conducteur, propres à être ouverts lorsque les pilules sont extraites manuellement par un utilisateur, ledit chemin conducteur étant à chaque fois agencé pour présenter une plus grande résistance que la portion en parallèle, **caractérisé en ce que** on fixe le support comprenant des portions frangibles réparties régulièrement le long de la partie conductrice par collage sur le blister, pour former des interrupteurs sensiblement au droit des pilules du blister, on teste régulièrement l'impédance du chemin conducteur et on ouvre un à un lesdits interrupteurs lors de l'extraction manuelle des pilules, tout en enregistrant les variations d'impédance de la partie conducteur en corrélation avec les dates et heures desdites variations en utilisant les tests sur l'impédance pour éliminer les risques de faux positifs.

17. Procédé selon la revendication 16, **caractérisé en ce que**, pou tester l'impédance on mesure périodiquement la tension Ti puis on moyenne les valeurs obtenues sur n mesures, que l'on compare avec la valeur Tᵢ₋₁ obtenue par une moyenne précédente, et si cette valeur est supérieure d'une valeurs déterminée on en déduit l'extraction d'une pilule.

18. Procédé selon la revendication 17, **caractérisé en ce que** n est compris entre cinq et dix, et au moins deux couples de tensions moyennes successives sont vérifiées pour valider une sortie de pilule.

19. Procédé selon l'une quelconque des revendications 16 à 18, **caractérisé en ce que** on dispose le blister lors de sa fixation sur la plaquette de façon à ce que les parties conductrices des portions frangibles qui se brisent soient décalées par rapport aux pilules correspondantes.

## Patentansprüche

1. Vorrichtung (1) zur Complianceüberwachung mit einem Plättchen (2, 27), das mit einer elektronischen Schaltung (3) zur Erfassung und Aufzeichnung des Zeitpunkts der Herausnahme der Pillen (4) eines Blisters (5) versehen ist, und mit Mitteln (6, 44) zur Befestigung des Blisters an dem Plättchen, wobei das Plättchen durch einen Träger (7) gebildet ist, auf dem der leitende Teil (8) der Schaltung durch Auftragen oder Kleben eines metallischen Drahts bzw. Films gedruckt wird, um Schalter (9) zu bilden, die geeignet sind, geöffnet zu werden, wenn die Pillen manuell von einem Benutzer herausgenommen werden, wobei der leitende Teil identische leitende Abschnitte (12, 28) aufweist, die regelmäßig parallel entlang eines leitenden Pfades (13) verteilt sind, wobei der leitende Pfad jeweils ausgebildet ist, um einen größeren Widerstand als der parallel verlaufende Abschnitt aufzuweisen,
**dadurch gekennzeichnet,**
**dass** der Träger weich und flexibel ist, dass er Sollbruchabschnitte (14) umfasst, an deren Rändern die leitenden Abschnitte (12) gedruckt sind, die regelmäßig verteilt sind, um einer jeweiligen Pille (4) zu entsprechen, so dass die einem leitenden Abschnitt zugeordneten Sollbruchabschnitte des Plättchens bei der Herausnahme einer Pille gebrochen werden, dass die Befestigungsmittel Klebebefestigungsmittel sind, dass er ergänzende Mittel aufweist, um die Berücksichtigung von Fehlkontakten auszuschließen, dass die Schaltung Mittel (16) für die Messung der Gesamtimpedanz des leitenden Teils und Rechenmittel aufweist, um daraus den Zeitpunkt der Herausnahme einer Pille abzuleiten, und dass die ergänzenden Mittel zum Aufschließen der Berücksichtigung von Fehlkontakten Rechenmittel umfassen, die angeordnet sind, um die Gesamtimpedanz regelmäßig erneut zu prüfen, um das Risiko von falsch positiven Auswürfen auszuschließen.

2. Vorrichtung nach Anspruch 1,
**dadurch gekennzeichnet,**
**dass** die Sollbruchabschnitte (14) längliche Ausnehmungen (37, 43) aufweisen, die durch eine Lasche (42) gesperrt sind.

3. Vorrichtung nach Anspruch 2,
**dadurch gekennzeichnet,**
**dass** die gegenüber den Öffnungen angeordnete Lasche (42) eine Verstärkung (41) aufweist.

4. Vorrichtung nach einem der Ansprüche 2 und 3,
**dadurch gekennzeichnet,**
**dass** die Lasche (42) in ihrer Mitte ausgeweitet ist.

5. Vorrichtung nach einem der vorhergehenden Ansprüche,
**dadurch gekennzeichnet,**
**dass** das Plättchen (2, 27) durchsichtig ist.

6. Vorrichtung nach einem der vorhergehenden Ansprüche,
**dadurch gekennzeichnet,**
**dass** das Plättchen mit einem durchsichtigen Firnis oder einem Isoliermaterial auf der elektronischen Schaltung überzogen ist, um die ergänzenden Mittel mindestens teilweise zu bilden.

7. Vorrichtung nach einem der vorhergehenden Ansprüche,
**dadurch gekennzeichnet,**
**dass** die Befestigungsmittel (6) durch eine Klebeschicht (6) gebildet sind, die durch einen Film (20) geschützt ist, der vor der Befestigung des Blisters an dem Plättchen abgezogen werden kann.

8. Vorrichtung nach Anspruch 7,
**dadurch gekennzeichnet,**
**dass** der abziehbare Film als ein auf sich selbst umgeschlagenes Band ausgebildet ist, bei dem eine Seite einer ersten Hälfte so auf den Blister geklebt ist, dass sie leicht abgerissen werden kann, und die andere Hälfte auf die erste Hälfte umgeschlagen ist und ein Griff-Ende aufweist.

9. Vorrichtung nach Anspruch 8,
**dadurch gekennzeichnet,**
**dass** die Vorrichtung ferner einen abnehmbaren Träger aus Karton aufweist, mit einer Öffnung für den Einbau des Gehäuses mit den Rechenmitteln, einer Öffnung zum Einfügen des Blisters auf den Träger, der mit dem leitenden Teil der Schaltung versehen ist, welcher angeordnet ist, um den Blister verschieblich in Bezug auf den Träger zu arretieren, und mit Mitteln für die Führung und das Haltern des Endes der anderen Hälfte des abziehbaren Films, welche angeordnet sind, um die Freilegung der Fläche der ersten Hälfte durch Ziehen in der seitlichen Ebene zu ermöglichten, um die Klebeschicht freizulegen und das Kleben des Blisters auf den Träger durch einfachen Druck zuzulassen.

10. Vorrichtung nach einem der vorhergehenden Ansprüche,
**dadurch gekennzeichnet,**
**dass** das Plättchen aus einem Gewebe aus Glas und Epoxidharz mit einer Dicke in der Größenordnung des Zehntelmillimeters oder aus einem unter der Bezeichnung "Kapton" bekannten Material besteht.

11. Vorrichtung nach einem der vorhergehenden Ansprüche,
**dadurch gekennzeichnet,**
**dass** der leitende Teil der gedruckten Schaltung ein Auftrag aus verzinktem Kupfer ist.

12. Vorrichtung nach einem der vorhergehenden Ansprüche,
**dadurch gekennzeichnet,**
**dass** die leitenden Abschnitte (28) durch Laschen (29) mit zwei Armen (30, 31) gebildet sind, welche durch einen Zwischenabschnitt (32) verbunden sind und voneinander getrennt werden können durch Brechen ihrer Verbindungsstellen (33), die durch Perforationen (34) geschwächt sind, welche daran in dem Plättchen ausgebildet sind.

13. Vorrichtung nach einem der vorhergehenden Ansprüche,
**dadurch gekennzeichnet,**
**dass** jeder leitende Abschnitt (30) durch zwei Unterabschnitte (28, 28') gebildet ist, die zwei Schalter bilden, welche beidseitig des entsprechenden Sollbruchabschnitts in Serie geschaltet sind.

14. Vorrichtung nach Anspruch 13 abhängig von Anspruch 11.
**dadurch gekennzeichnet,**
**dass** die zwei Schalter (28, 28') eines und desselben Sollbruchabschnitts ähnlich ausgebildet sind.

15. Vorrichtung nach einem der vorhergehenden Ansprüche,
**dadurch gekennzeichnet,**
**dass** die Mittel für die periodische und/oder regelmäßige erneute Prüfung der Gesamtimpedanz Mittel aufweisen, um mindestens eine erste über n Messungen gemittelte Spannung Tᵢ mit einer vorherigen gemittelten Spannung Tᵢ₋₁ zu vergleichen.

16. Verfahren zur Complianceüberwachung mit Hilfe eines Plättchens (2, 27), das mit einer elektronischen Schaltung (3) zur Erfassung und Aufzeichnung des Zeitpunkts der Herausnahme der Pillen eines Blisters (5) versehen ist, wobei das Plättchen durch einen Träger (7) gebildet ist, auf dem der leitende Teil der Schaltung gedruckt ist, um entlang eines leitenden Pfades Schalter parallel zu bilden, die geeignet sind, geöffnet zu werden, wenn die Pillen manuell von einem Benutzer herausgenommen werden, wobei der leitende Pfad jeweils ausgebildet ist, um einen größeren Widerstand als der parallel verlaufende Abschnitt aufzuweisen, dadurch gekennzeichet, dass der Träger mit Sollbruchabschnitten befestigt wird, die durch Kleben auf den Blister regelmäßig entlang des leitenden Teils verteilt sind, um im Wesentlichen rechtwinkelig zu den Pillen des Blisters Schalter zu bildern, die Impedanz des leitenden Pfades regelmäßig geprüft wird und die Schalter bei der manuellen Herausnahme der Pillen nacheinander geöffnet werden und dabei die Impedanzschwankungen des leitenden Teils in Korrelation mit dem Datum und der Uhrzeit der Schwankungen unter Verwendung der Impedanzprüfungen aufgezeichnet werden, um das Risiko von falsch positiven Auswürfen auszuschließen.

17. Verfahren nach Anspruch 16,
**dadurch gekennzeichnet,**
**dass** zum Prüfen der Impedanz die Spannung T₁ periodisch gemessen wird, die erzielten Werte anschließend über n Messungen gemittelt werden und mit dem Wert Tᵢ₋₁ verglichen wird, der aus einer vorherigen Mittelung resultiert, und, wenn dieser Wert um einen bestimmten Wert s höher ist, daraus die Herausnahme einer Pille abgeleitet wird.

18. Verfahren nach Anspruch 17,
**dadurch gekennzeichnet,**
**dass** n zwischen fünf und zehn liegt und mindestens zwei Paare aufeinander folgender Mittelspannungen geprüft werden, um einen Pillenauswurf zu quittieren.

19. Verfahren nach einem der Ansprüche 16 bis 18,
**dadurch gekennzeichnet,**
**dass** der Blister bei seiner Befestigung am Plättchen so angeordnet wird, dass die leitenden Teile der brechenden Sollbruchabschnitte in Bezug auf die entsprechenden Pillen versetzt sind.

## Claims

1. Device (1) for measuring compliance comprising a circuit card (2, 27) equipped with an electronic circuit (3) for detecting and recording the moment of extraction of the pills (4) belonging to a blister pack (5) and with means (6, 44) for fixing the blister pack to the circuit card, the circuit card being formed of a substrate (7) on which the conducting part (8) of the said circuit is printed by deposition or gluing of a metal wire or film in order to form switches (9) configured to be opened when the pills are extracted manually by a user, the said conducting part including identical conducting portions (12, 28) distributed uniformly in parallel along a conductor path (13), the said conductor path being configured each time to exhibit a larger resistance than the portion in parallel, **characterised in that** the substrate is supple and flexible, **in that** it comprises frangible portions (14) at the edge of which are printed the said conducting portions (12) distributed uniformly to correspond with a corresponding pill (4) so that the frangible portions of the circuit card associated with a conducting portion are broken when a pill is extracted, **in that** the means for fixing are gluing means, **in that** it includes complementary means for eliminating the registering of false contacts, **in that** the circuit includes means (16) for measuring the total impedance of the conducting part and means for calculating to deduce therefrom the moment of extraction of a pill, and **in that** the complementary means for eliminating the registering of false contacts comprise means for calculating configured to retest the total impedance regularly so as to eliminate the risks of false positives.

2. Device according to claim 1, **characterised in that** the frangible portions (14) include oblong recesses (37, 43) barred with a tongue (42).

3. Device according to claim 2, **characterised in that** the tongue (42) placed facing the orifices includes a reinforcement (41).

4. Device according to any one of claims 2 and 3, **characterised in that** the tongue (42) is widened at its middle.

5. Device according to any one of the preceding claims, **characterised in that** the circuit card (2, 27) is transparent.

6. Device according to any one of the preceding claims, **characterised in that** the circuit card is covered with a transparent lacquer or an insulating material over the electronic circuit to form at least partially the said complementary means.

7. Device according to any one of the preceding claims, **characterised in that** the means for fixing (6) are formed of a layer of glue (6) protected by a film (20) which can be peeled off before the blister pack is fixed on the circuit card.

8. Device according to claim 7, **characterised in that** the film which can be peeled off is in the form of a strip which is folded back on itself, one face of a first half of which is glued to the blister pack in such a way that it can be detached easily and the other half is folded back on the said first half and comprises an end for gripping.

9. Device according to claim 8, **characterised in that** the device also includes a detachable substrate made of card having an orifice for engagement of the housing containing the means for calculating, an opening for insertion of the blister pack on the substrate provided with the conducting part of the circuit configured to immobilise the blister pack in translation in relation to the said substrate, and means for guiding and holding the end of the other half of the film which can be peeled off which are configured to allow the release of the face of the first half by pulling in the lateral plane, in order to expose the layer of glue and allow the blister pack to be glued on the substrate by simple pressure.

10. Device according to any one of the preceding claims, **characterised in that** the circuit card is made of fibre glass cloth and epoxy resin with a thickness of the order of a tenth of a millimetre, or of a material known by the name Kapton.

11. Device according to any one of the preceding claims, **characterised in that** the conducting part of the printed circuit is a tinned coppered block.

12. Device according to any one of the preceding claims, **characterised in that** the conducting portions (28) are formed by elements (29) with two arms (30, 31) connected by an intermediate portion (32) and detachable from one another by breaking of their junction zones (33) weakened by perforations (34) made at that point in the circuit card.

13. Device according to any one of the preceding claims, **characterised in that** each conducting portion (30) is formed by two sub-portions (28, 28') forming two switches arranged in series on either side of the corresponding frangible portion.

14. Device according to claim 13 dependent on claim 11, **characterised in that** the two switches (28, 28') of a same frangible portion are formed in similar fashion.

15. Device according to any one of the preceding claims, **characterised in that** the means for periodically and/or regularly retesting the total impedance comprise means for comparing at least a first average voltage Tᵢ over n measurements with a previous average voltage Tᵢ₋₁.

16. Method for measuring compliance with the aid of a circuit card (2, 27) equipped with an electronic circuit (3) for detecting and recording the moment of extraction of the pills belonging to a blister pack (5), the said circuit card being formed of a substrate (7) on which the conducting part of the said circuit is printed to form switches in parallel along a conductor path, configured to be opened when the pills are extracted manually by a user, the said conductor path being configured each time to exhibit a greater resistance than the portion in parallel, **characterised in that** the substrate comprising frangible portions distributed uniformly along the conducting part is fixed to the blister pack by gluing so as to form switches substantially at right angles to the pills of the blister pack, the impedance of the conductor path is tested regularly and the said switches are opened one by one when the pills are extracted manually, recording the variations in impedance of the conducting part in correlation with the dates and times of the said variations using the tests on the impedance to eliminate the risks of false positives.

17. Method according to claim 16, **characterised in that** to test the impedance the voltage Tᵢ is measured periodically then the average is established for the values obtained over n measurements and compared with the value Tᵢ₋₁ obtained from a previous average, and if this value is greater than a predetermined value s, the extraction of a pill is deduced from this.

18. Method according to claim 17, **characterised in that** n lies between five and ten, and at least two pairs of successive average voltages are verified to validate the extraction of a pill.

19. Method according to any one of claims 16 to 18, **characterised in that** when it is fixed on the circuit card the blister pack is disposed so that the conducting parts of the frangible portions which break are offset in relation to the corresponding pills.
